(19) Europäisches Patentamt / European Patent Office / Office européen des brevets

(11) **EP 2 432 831 B1**

(12) **EUROPEAN PATENT SPECIFICATION**

(45) Date of publication and mention
of the grant of the patent:
**08.08.2018 Bulletin 2018/32**

(21) Application number: **10778207.0**

(22) Date of filing: **17.05.2010**

(51) Int Cl.:
*C08L 23/00* (2006.01)  *C08L 25/04* (2006.01)
*C08K 3/26* (2006.01)  *C08J 5/00* (2006.01)
*B65D 6/00* (2006.01)  *C08L 23/06* (2006.01)
*C08L 23/08* (2006.01)  *C08L 23/10* (2006.01)
*C08L 23/14* (2006.01)  *C08L 23/02* (2006.01)
*C08L 23/22* (2006.01)

(86) International application number:
**PCT/US2010/035115**

(87) International publication number:
**WO 2010/135244 (25.11.2010 Gazette 2010/47)**

(54) **THERMOPLASTIC ELASTOMERS EXHIBITING SUPERIOR FOOD CONTACT COMPLIANCE**

THERMOPLASTISCHE ELASTOMERE MIT HERVORRAGENDER LEBENSMITTELKONTAKTKOMPATIBILITÄT

ELASTOMÈRES THERMOPLASTIQUES PARTICULIÈREMENT RESPECTUEUX DES NORMES EN VIGUEUR EN MATIÈRE DE CONTACT AVEC LES DENRÉES ALIMENTAIRES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **19.05.2009 US 179682 P**
**07.04.2010 US 321697 P**

(43) Date of publication of application:
**28.03.2012 Bulletin 2012/13**

(73) Proprietor: **PolyOne Corporation**
**Avon Lake, OH 44012 (US)**

(72) Inventors:
• **VENKATASWAMY, Krishna**
**Crystal Lake**
**IL 60014 (US)**

• **QIAN, Guoqiang**
**Buffalo Grove**
**IL 60089 (US)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(56) References cited:
**EP-A1- 0 688 819**    **EP-A1- 1 211 289**
**WO-A1-2006/101966**    **WO-A2-2006/101926**
**WO-A2-2006/102155**    **US-A- 5 811 494**
**US-A- 5 929 147**    **US-A1- 2005 098 927**
**US-A1- 2006 211 819**    **US-A1- 2007 197 712**
**US-A1- 2008 200 615**    **US-A1- 2009 105 374**

**Description**

FIELD OF THE INVENTION

This invention relates to thermoplastic elastomers that pass very difficult extraction tests, enabling them to be used in contact with food.

BACKGROUND OF THE INVENTION

The world of polymers has progressed rapidly to transform material science from wood and metals of the 19th Century to the use of thermoset polymers of the mid-20th Century to the use of thermoplastic polymers of later 20th Century.
An example of a popular rubber is butyl rubber which has excellent gas barrier properties. But butyl rubber is not capable of being injection molded.
Thermoplastic elastomers (TPEs) combine the benefits of elastomeric properties of thermoset polymers, such as vulcanized rubber, with the processing properties of thermoplastic polymers. Therefore, TPEs are preferred because they can be made into articles using injection molding equipment. But often, TPEs are not suitable for use in contact with fatty food in some areas such as Europe, because they can not pass the stringent olive oil test.
Recently, a new type of TPE has become available, namely: ethylene/alpha-olefin interpolymers as disclosed in PCT Patent Publications WO 2006/101966; WO 2006/102155; WO 2006/101999; WO 2006/101926; WO 2006/101928; and WO 2006/101924, which can also be used in blends with other thermoplastic and non-thermoplastic polymers.
US 2009/0105374 A1 discloses improved impact modified thermoplastic compositions which include a first polymer that can be high density polyethylene, an ethylene/$\alpha$-olefin interpolymer, and a filler.
US 5 811 494 A1 discloses polymer compositions having good flowability, impact performance and modulus made of blends comprising, e.g., high density polyethylene and random ethylene/$\alpha$-olefin copolymers.

SUMMARY OF THE INVENTION

What the art needs is a TPE which passes stringent extraction tests to permit the TPE to be used in contact with food, particularly fatty foods, which are the most likely type of food to contact with a synthetic material and have the ability to extract several complex chemicals blended therein.
Quite unexpectedly, what has been found is that a blend of an olefin polymer and ethylene/alpha-olefin interpolymer passes the most difficult Olive Oil Extraction Test promulgated by the European Union as EU82/711/EEC.
One aspect of the invention is a plastic article molded or extruded from a thermoplastic elastomer compound comprising (a) high density polyethylene, and (b) ethylene/alpha-olefin interpolymer, wherein the interpolymer is an olefin block copolymer, wherein the olefin block copolymer and the high density polyethylene are present at a weight ratio of 40:60, wherein the plastic article passes Olive Oil Extraction Test EU82/711/EEC or Iso-octane Extraction Test EN1186-14.
Another aspect of the invention is the use of a thermoplastic elastomer compound for shaping a plastic article compliant with Olive Oil Extraction Test EU82/711/EEC, wherein the thermoplastic elastomer compound comprises: (a) high density polyethylene, and (b) ethylene/alpha-olefin interpolymer, wherein the interpolymer is an olefin block copolymer, wherein the olefin block copolymer and the high density polyethylene are present at a weight ratio of 40:60.
Features of the invention will become apparent with reference to the following embodiments.

EMBODIMENTS OF THE INVENTION

Thermoplastic Elastomer Compound

The compound of the present invention comprises a mixture of ethylene/alpha-olefin interpolymer and an olefin polymer, i.e., high density polyethylene, which together unexpectedly pass the Olive Oil Extraction Test.

Ethylene/Alpha-Olefin Interpolymer

The PCT publications identified in the Background above recite many attributes and features of these new ethylene/alpha-olefin interpolymers, also known in the industry as olefin block copolymers or "OBC".
Without departing from reliance on the original documentation about these new type of thermoplastic elastomers as contained in the PCT publications identified above, briefly, they can be characterized as follows, in a recitation from PCT Publication WO/2006/101966:

"Interpolymer" means a polymer prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

The term "ethylene/α-olefin interpolymer" generally refers to polymers comprising ethylene and an α-olefin having 3 or more carbon atoms. Preferably, ethylene comprises the majority mole fraction of the whole polymer, i.e., ethylene comprises at least about 50 mole percent of the whole polymer. More preferably ethylene comprises at least about 60 mole percent, at least about 70 mole percent, or at least about 80 mole percent, with the substantial remainder of the whole polymer comprising at least one other comonomer that is preferably an α-olefin having 3 or more carbon atoms. For many ethylene/octene copolymers, the preferred composition comprises an ethylene content greater than about 80 mole percent of the whole polymer and an octene content of from about 10 to about 15, preferably from about 15 to about 20 mole percent of the whole polymer. In some embodiments, the ethylene/α-olefin interpolymers do not include those produced in low yields or in a minor amount or as a by-product of a chemical process. While the ethylene/α-olefin interpolymers can be blended with one or more polymers, the as-produced ethylene/α- olefin interpolymers are substantially pure and often comprise a major component of the reaction product of a polymerization process,

The term "crystalline" if employed, refers to a polymer or a segment that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetry (DSC) or equivalent technique.

The term "multi-block copolymer" or "segmented copolymer" refers to a polymer comprising two or more chemically distinct regions or segments (also referred to as "blocks") preferably joined in a linear manner, that is, a polymer comprising chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers. More specifically, when produced in a continuous process, the polymers desirably possess PDI from about 1.7 to about 8, preferably from about 1.7 to about 3.5, more preferably from about 1.7 to about 2.5, and most preferably from about 1.8 to about 2.5 or from about 1.8 to about 2.1. When produced in a batch or semi-batch process, the polymers possess PDI from about 1.0 to about 2.9, preferably from about 1.3 to about 2.5, more preferably from about 1.4 to about 2.0, and most preferably from about 1.4 to about 1.8. It is noted that "block(s)" and "segment(s)" are used herein interchangeably.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, RL and an upper limit, Ru, is disclosed, any number falling within the range is specifically disclosed. In particular, the following numbers within the range are specifically disclosed: R=RL+k*(Ru-RL), wherein k is a variable ranging from 1 percent to 100 percent with a 1 percent increment, i.e., k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Embodiments of the invention provide a new class of ethylene/α-olefin block interpolymers (hereinafter "inventive polymer", "ethylene/α-olefin interpolymers", or variations thereof). The ethylene/α-olefin interpolymers comprise ethylene and one or more copolymerizable α-olefin comonomers in polymerized form, characterized by multiple blocks or segments of two or more polymerized monomer units differing in chemical or physical properties. That is, the ethylene/α-olefin interpolymers are block interpolymers, preferably multi-block interpolymers or copolymers. The terms "interpolymer" and copolymer" are used interchangeably herein. In some embodiments, the multi-block copolymer can be represented by the following formula:

(AB)n

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a linear fashion, not in a branched or a star fashion. "Hard" segments refer to blocks of polymerized units in which ethylene is present in an amount greater than 95 weight percent, and preferably greater than 98 weight percent. In other words, the comonomer content in the hard segments is less than 5 weight percent, and preferably less than 2 weight percent. In some embodiments, the hard segments comprises all or substantially all ethylene. "Soft" segments, on the other hand, refer to blocks of polymerized units in which the comonomer content is greater than 5 weight percent, preferably greater than 8 weight percent, greater than 10 weight percent, or greater than 15 weight percent. In some embodiments, the comonomer content in the soft segments can be greater than 20 weight percent, greater than 25 eight percent, greater than 30 weight percent, greater than 35 weight percent, greater than 40 weight percent, greater than 45 weight percent, greater than 50 weight percent, or greater than 60 weight percent.

In some embodiments, A blocks and B blocks are randomly distributed along the polymer chain. In other words, the block copolymers usually do not have a structure like:

AAA- AA-BBB- BB

In other embodiments, the block copolymers usually do not have a third type of block.. In still other embodiments, each of block A and block B has monomers or comonomers randomly distributed within the block. In other words, neither block A nor block B comprises two or more segments (or sub-blocks) of distinct composition, such as a tip segment, which has a different composition than the rest of the block.

In one aspect, the ethylene/$\alpha$-olefin interpolymers used in embodiments of the invention have a Mw/Mn from about 1.7 to about 3.5 and at least one melting point, Tm, in degrees Celsius and density, d, in grams/cubic centimeter, wherein the numerical values of the variables correspond to the relationship:

Tm > -2002.9 + 4538.5(d) - 2422.2(d)2, and preferably
Tm > -6288.1 + 13141(d) - 6720.3(d)2, and more preferably
Tm > 858.91 - 1825.3(d) + 1112.8(d)2.

Unlike the traditional random copolymers of ethylene/$\alpha$-olefins whose melting points decrease with decreasing densities, these interpolymers (represented by diamonds) exhibit melting points substantially independent of the density, particularly when density is between about 0.87 g/cc to about 0.95 g/cc. For example, the melting point of such polymers are in the range of about 110 0C to about 130 0C when density ranges from 0.875 g/cc to about 0.945 g/cc. In some embodiments, the melting point of such polymers are in the range of about 115°C to about 125°C when density ranges from 0.875 g/cc to about 0.945 g/cc.

In another aspect, the ethylene/$\alpha$-olefin interpolymers comprise, in polymerized form, ethylene and one or more $\alpha$-olefins and are characterized by a $\Delta T$, in degree Celsius, defined as the temperature for the tallest Differential Scanning Calorimetry ("DSC") peak minus the temperature for the tallest Crystallization Analysis Fractionation ("CRYSTAF") peak and a heat of fusion in J/g, $\Delta H$, and $\Delta T$ and $\Delta H$ satisfy the following relationships:

$\Delta T$ > -0.1299($\Delta H$) + 62.81, and preferably
$\Delta T$ > -0.1299($\Delta H$) + 64.38, and more preferably
$\Delta T \geq$ -0.1299($\Delta H$) + 65.95,

for $\Delta H$ up to 130 J/g. Moreover, $\Delta T$ is equal to or greater than 48 °C for $\Delta H$ greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 300C, and $\Delta H$ is the numerical value of the heat of fusion in J/g. More preferably, the highest CRYSTAF peak contains at least 10 percent of the cumulative polymer.

In yet another aspect, the ethylene/$\alpha$-olefin interpolymers have a molecular fraction which elutes between 40°C and 130°C when fractionated using Temperature Rising Elution Fractionation ("TREF"), characterized in that said fraction has a molar comonomer content higher, preferably at least 5 percent higher, more preferably at least 10 percent higher, than that of a comparable random ethylene interpolymer fraction eluting between the same temperatures, wherein the comparable random ethylene interpolymer contains the same comonomer(s), and has a melt index, density, and molar comonomer content (based on the whole polymer) within 10 percent of that of the block interpolymer. Preferably, the Mw/Mn of the comparable interpolymer is also within 10 percent of that of the block interpolymer and/or the comparable interpolymer has a total comonomer content within 10 weight percent of that of the block interpolymer.

In still another aspect, the ethylene/$\alpha$-olefin interpolymers are characterized by an elastic recovery, Re, in percent at 300 percent strain and 1 cycle measured on a compression-molded film of an ethylene/$\alpha$-olefin interpolymer, and has a density, d, in grams/cubic centimeter, wherein the numerical values of Re and d satisfy the following relationship when ethylene/$\alpha$-olefin interpolymer is substantially free of a cross-linked phase:

Re >1481-1629(d); and preferably
Re >1491-1629(d); and more preferably

Re >1501-1629(d); and even more preferably
Re ≥1511-1629(d).

In some embodiments, the ethylene/α-olefin interpolymers have a tensile strength above 10 MPa, preferably a tensile strength > 11 MPa, more preferably a tensile strength > 13 MPa and/or an elongation at break of at least 600 percent, more preferably at least 700 percent, highly preferably at least 800 percent, and most highly preferably at least 900 percent at a crosshead separation rate of 11 cm/minute.

In other embodiments, the ethylene/α-olefin interpolymers have (1) a storage modulus ratio, G'(25°C)/G'(100°C), of from 1 to 50, preferably from 1 to 20, more preferably from 1 to 10; and/or (2) a 70°C compression set of less than 80 percent, preferably less than 70 percent, especially less than 60 percent, less than 50 percent, or less than 40 percent, down to a compression set of 0 percent.

In still other embodiments, the ethylene/α-olefin interpolymers have a 70°C compression set of less than 80 percent, less than 70 percent, less than 60 percent, or less than 50 percent. Preferably, the 70°C compression set of the interpolymers is less than 40 percent, less than 30 percent, less than 20 percent, and may go down to about 0 percent.

In some embodiments, the ethylene/α-olefin interpolymers have a heat of fusion of less than 85 J/g and/or a pellet blocking strength of equal to or less than 100 pounds/foot2 (4800 Pa), preferably equal to or less than 50 lbs/ft$^2$ (2400 Pa), especially equal to or less than 5 lbs/ft$^2$ (240 Pa), and as low as 0 lbs/ft$^2$ (0 Pa).

In other embodiments, the ethylene/α-olefin interpolymers comprise, in polymerized form, at least 50 mole percent ethylene and have a 70°C compression set of less than 80 percent, preferably less than 70 percent or less than 60 percent, most preferably less than 40 to 50 percent and down to close to zero percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes and possessing a most probable distribution of block lengths. Preferred multi-block copolymers are those containing 4 or more blocks or segments including terminal blocks. More preferably, the copolymers include at least 5, 10 or 20 blocks or segments including terminal blocks.

In addition, the inventive block interpolymers have additional characteristics or properties. In one aspect, the interpolymers, preferably comprising ethylene and one or more copolymerizable comonomers in polymerized form, are characterized by multiple blocks or segments of two or more polymerized monomer units differing in chemical or physical properties (blocked interpolymer), most preferably a multi-block copolymer, said block interpolymer having a molecular fraction which elutes between 40°C and 130°C when fractionated using TREF, characterized in that said fraction has a molar comonomer content higher, preferably at least 5 percent higher, more preferably at least 10 percent higher, than that of a comparable random ethylene interpolymer fraction eluting between the same temperatures, wherein said comparable random ethylene interpolymer comprises the same comonomer(s), and has a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer.

Comonomer content may be measured using any suitable technique, with techniques based on nuclear magnetic resonance ("NMR") spectroscopy preferred. Moreover, for polymers or blends of polymers having relatively broad TREF curves, the polymer is first fractionated using TREF into fractions each having an eluted temperature range of 10°C or less. That is, each eluted fraction has a collection temperature window of 10°C or less. Using this technique, said block interpolymers have at least one such fraction having a higher molar comonomer content than a corresponding fraction of the comparable interpolymer.

In another aspect, the interpolymer is an olefin interpolymer, preferably comprising ethylene and one or more copolymerizable comonomers in polymerized form, characterized by multiple blocks (i.e., at least two blocks) or segments of two or more polymerized monomer units differing in chemical or physical properties (blocked interpolymer), most preferably a multi-block copolymer, said block interpolymer having a peak (but not just a molecular fraction) which elutes between 40°C and 130°C (but without collecting and/or isolating individual fractions), characterized in that said peak, has a comonomer content estimated by infra-red spectroscopy when expanded using a full width/half maximum (FWHM) area calculation, has an average molar comonomer content higher, preferably at least 5 percent higher, more preferably at least 10 percent higher, than that of a comparable random ethylene interpolymer peak at the same elution temperature and expanded using a full width/half maximum (FWHM) area calculation, wherein said comparable random ethylene interpolymer has the same comonomer(s) and has a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area [CH3/CH2] from the ATREF infra-red detector, wherein the tallest (highest) peak is identified from the base line, and then the FWHM area is determined. For a distribution measured using an ATREF peak, the FWHM area is defined as the area under the curve between $T_1$ and $T_2$, where $T_1$ and $T_2$ are

points determined, to the left and right of the ATREF peak, by dividing the peak height by two, and then drawing a line horizontal to the base line, that intersects the left and right portions of the ATREF curve. A calibration curve for comonomer content is made using random ethylene/$\alpha$-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined by referencing this calibration curve using its FWHM methyl: methylene area ratio [CH3/CH2] of the TREF peak.

Comonomer content may be measured using any suitable technique, with techniques based on nuclear magnetic resonance (NMR) spectroscopy preferred. Using this technique, said blocked interpolymer has higher molar comonomer content than a corresponding comparable interpolymer.

Preferably, for interpolymers of ethylene and 1-octene, the block interpolymer has a comonomer content of the TREF fraction eluting between 40 and 130°C greater than or equal to the quantity (- 0.2013) T + 20.07, more preferably greater than or equal to the quantity (-0.2013) T+ 21.07, where T is the numerical value of the peak elution temperature of the TREF fraction being compared, measured in °C.

The multi-block polymers typically comprise various amounts of "hard" and "soft" segments.

"Hard" segments refer to blocks of polymerized units in which ethylene is present in an amount greater than about 95 weight percent, and preferably greater than about 98 weight percent based on the weight of the polymer. In other words, the comonomer content (content of monomers other than ethylene) in the hard segments is less than about 5 weight percent, and preferably less than about 2 weight percent based on the weight of the polymer. In some embodiments, the hard segments comprises all or substantially all ethylene.

"Soft" segments, on the other hand, refer to blocks of polymerized units in which the comonomer content (content of monomers other than ethylene) is greater than about 5 weight percent, preferably greater than about 8 weight percent, greater than about 10 weight percent, or greater than about 15 weight percent based on the weight of the polymer. In some embodiments, the comonomer content in the soft segments can be greater than about 20 weight percent, greater than about 25 weight percent, greater than about 30 weight percent, greater than about 35 weight percent, greater than about 40 weight percent, greater than about 45 weight percent, greater than about 50 weight percent, or greater than about 60 weight percent.

The soft segments can often be present in a block interpolymer from about 1 weight percent to about 99 weight percent of the total weight of the block interpolymer, preferably from about 5 weight percent to about 95 weight percent, from about 10 weight percent to about 90 weight percent, from about 15 weight percent to about 85 weight percent, from about 20 weight percent to about 80 weight percent, from about 25 weight percent to about 75 weight percent, from about 30 weight percent to about 70 weight percent, from about 35 weight percent to about 65 weight percent, from about 40 weight percent to about 60 weight percent, or from about 45 weight percent to about 55 weight percent of the total weight of the block interpolymer. Conversely, the hard segments can be present in similar ranges. The soft segment weight percentage and the hard segment weight percentage can be calculated based on data obtained from DSC or NMR.

From PCT Publication WO 2006/101966 comes additional ways to characterize the interpolymers useful in the present invention:

The ethylene/$\alpha$-olefin interpolymer comprises polymerized units of ethylene and $\alpha$-olefin, wherein the interpolymer is characterized by an average block index greater than zero and up to about 1.0 and a molecular weight distribution, Mw/Mn, greater than about 1.3. It also comprises polymerized units of ethylene and $\alpha$-olefin, wherein the average block index is greater than 0 but less than about 0.4 and a molecular weight distribution, Mw/Mn, greater than about 1.3, and preferably wherein the average block index is in the range from about 0.1 to about 0.3 or more preferably wherein the average block index is in the range from about 0.4 to about 1.0, even more preferably wherein the average block index is in the range from about 0.3 to about 0.7, yet more preferably wherein the average block index is in the range from about 0.6 to about 0.9, and optimally wherein the average block index is in the range from about 0.5 to about 0.7.

The interpolymer can have a density of less than about 0.91 g/cc and desirably a density in the range from about 0.86 g/cc to about 0.91 g/cc.

The $\alpha$-olefin can be styrene, propylene, 1-butene, 1-hexene, 1-octene, 4-methyl-1-pentene, norbornene, 1-decene, 1,5- hexadiene, or a combination thereof. Preferably, the $\alpha$-olefin is 1-butene or 1-octene.

Desirably, the ethylene/$\alpha$-olefin interpolymer can have a Mw/Mn greater than about 1.5, desirably, greater than about 2.0, preferably from about 2.0 to about 8, and more preferably from about 1.7 to about 3.5.

The ethylene/$\alpha$-olefin interpolymer can also be characterized by at least one melting point, Tm, in degrees Celsius, and a density, d, in grams/cubic centimeter, wherein the numerical values of Tm and d correspond to the relationship:

$$Tm > -2002.9 + 4538.5(d) - 2422.2(d)2$$

The ethylene/$\alpha$-olefin interpolymer can also be characterized by an elastic recovery, Re, in percent at 300 percent strain and 1 cycle measured with a compression-molded film of the ethylene/α-olefin interpolymer, and a density, d, in grams/cubic centimeter, wherein the numerical values of Re and d satisfy the following relationship when ethylene/α-olefin interpolymer is substantially free of a cross-linked phase:

$$Re > 1481 - 1629(d)$$

The interpolymer can also be characterized by having at least one fraction obtained by Temperature Rising Elution Fractionation ("TREF"), wherein the fraction has a block index greater than about 0.3 and up to about 1.0 and the ethylene/α-olefin interpolymer has a molecular weight distribution, Mw/Mn, greater than about 1.3.

The interpolymer can also be characterized by having at least one fraction obtained by TREF, wherein the fraction has a block index greater than about 0 and up to about 0.4 and the ethylene/α- olefin interpolymer has a molecular weight distribution, Mw/Mn, greater than about 1.3.

Desirably, the block index of the fraction is greater than about 0.4, more desirably greater than about 0.5, preferably greater than about 0.6, more preferably greater than about 0.7, even more preferably greater than about 0.8, yet more preferably greater than about 0.9.

The interpolymer can have an ethylene content is greater than 50 mole percent with one or more hard segments and one or more soft segments.

Desirably, the hard segments are present in an amount from about 5% to about 85% by weight of the interpolymer.

Desirably, the hard segments comprise at least 98% of ethylene by weight. Desirably, the soft segments comprise less than 90% of ethylene by weight. Also desirably, the soft segments comprise less than 50% of ethylene by weight.

Preferably, the interpolymer comprises at least 10 hard and soft segments connected in a linear fashion to form a linear chain. Even more preferably, the hard segments and soft segments are randomly distributed along the chain. Most preferably, the hard segments do not include a tip segment. Alternatively, the soft segments do not include a tip segment.

The ethylene/alpha-olefin interpolymers useful in the present invention are commercially available from Dow Chemical Company of Midland, MI. Two grades are particularly preferred: D9507.10 and D9170.

## Olefin Polymer

The thermoplastic elastomer compound also includes an olefin polymer which is high density polyethylene. The olefin polymer unexpectedly provides superior resistance to olive oil extraction.

High density polyethylene (HDPE) is a well known and commonly used commercial polymer resin available from a large number of companies worldwide. Any HDPE is a candidate for use in this invention.

The high density polyethylene can have a melt index value according to ASTM D 1238 ranging from about 0.5 to about 200, and preferably from about 5 to about 50 g/10 min; a tensile strength at yield according to ASTM D 638 (50 mm/min.) ranging from about 10 to about 50, and preferably from about 15 to about 35 MPa; an elongation at break according to ASTM D 638 (50 mm/min.) ranging from about 10% to about 500%, and preferably from about 20% to about 200%; a flexural modulus according to ASTM 790 ranging from about 100 to about 4000, and preferably from about 500 to about 2000 MPa.

Presently preferred as a commercially available HDPE is SCLAIR 2714 HDPE Injection Molding Resin from Nova Chemicals of Calgary, Alberta, Canada, which is marketed as being useful in making food containers and lids.

## Optional Additives

The compound of the present invention can include conventional plastics additives in an amount that is sufficient to obtain a desired processing or performance property for the compound. The amount should not be wasteful of the additive nor detrimental to the processing or performance of the compound. Those skilled in the art of thermoplastics compounding, without undue experimentation but with reference to such treatises as Plastics Additives Database (2004) from Plastics Design Library (www.williamandrew.com), can select from many different types of additives for inclusion into the compounds of the present invention.

Non-limiting examples of optional additives include adhesion promoters; biocides (antibacterials, fungicides, and mildewcides), anti-fogging agents; anti-static agents; bonding, blowing and foaming agents; dispersants; fillers and extenders; fire and flame retardants and smoke suppresants; impact modifiers; initiators; lubricants; micas; pigments, colorants and dyes; oils and plasticizers; processing aids; release agents; silanes, titanates and zirconates; slip and anti-blocking agents; stabilizers; stearates; ultraviolet light absorbers; viscosity regulators; waxes; and combinations of them. Anti-oxidants are particularly useful for these plastic compounds to provide additional durability.

Processing

The preparation of compounds of the present invention is uncomplicated. The compound of the present can be made in batch or continuous operations.

Mixing in a continuous process typically occurs in an extruder that is elevated to a temperature that is sufficient to melt the polymer matrix with addition either at the head of the extruder or downstream in the extruder of the solid ingredient additives. Extruder speeds can range from about 50 to about 500 revolutions per minute (rpm), and preferably from about 400 rpm. Typically, the output from the extruder is pelletized for later extrusion or molding into polymeric articles.

Mixing in a batch process typically occurs in a Banbury mixer that is also elevated to a temperature that is sufficient to melt the polymer matrix to permit addition of the solid ingredient additives. The mixing speeds range from 60 to 1000 rpm. Also, the output from the mixer is chopped into smaller sizes for later extrusion or molding into polymeric articles.

Subsequent extrusion or molding techniques are well known to those skilled in the art of thermoplastics polymer engineering. Without undue experimentation but with such references as "Extrusion, The Definitive Processing Guide and Handbook"; "Handbook of Molded Part Shrinkage and Warpage"; "Specialized Molding Techniques"; "Rotational Molding Technology"; and "Handbook of Mold, Tool and Die Repair Welding", all published by Plastics Design Library (www.williamandrew.com), one can make articles of any conceivable shape and appearance using compounds of the present invention.

USEFULNESS OF THE INVENTION

TPEs of the present invention, based on a mixture OBC and olefin polymer provide the first TPE which can be used as a molded or extruded plastic article in contact with food, because the TPE is able to pass the stringent Olive Oil Extraction Test EU82/711/EEC using olive oil itself or its approved substitute test media. Olive Oil Extraction Test EU82/711/EEC approves the use of iso-octane (nonpolar compounds) or 95 % ethanol (polar compounds) as a substitute test medium to test for overall migration from plastics intended to come into contact with fatty foodstuffs.

These new TPEs can be shaped (e.g., molded or extruded) alone or with any other polymer or metal or ceramic into any number of useful plastic articles for use in kitchens, food processing areas, food handling operations, etc., such as utensils, containers, food-contacting elements of food machinery, and food storage equipment. Often TPEs are overmolded to other polymers to provide a convenient manual gripping surface for the user of the food contacting plastic article. Likewise, the TPE can be assembled with any metal or ceramic as desired within acceptable ergonomics and practicality by those having ordinary skill in the art of food preparation and processing.

These new TPEs have all the thermoplastic and elastomeric properties appreciated by polymer chemists and engineers with the added benefit of being certifiable for fatty food contact.

Tensile strength (ASTM D412, Die C) for these TPEs can range from about 1 to about 20, and preferably from about 2 to about 15 MPa.

Shore A Hardness (ASTM D2240, 10 sec. delay) can range from about 30 to about 100, and preferably from about 60 to about 95.

Percent elongation (ASTM D412, Die C) can range from about 40 to about 1000, and preferably from about 100 to about 500%.

Nearly any food utensil, food storage container, food cooking equipment, can benefit from being made from the TPEs of the present invention.

EXAMPLES

Table 1 shows the source materials for Comparative Examples A-C and Examples 1-8, wherein Examples 1-3 and 5-8 are not part of the invention.

| Table 1 | |
|---|---|
| Brand | Ingredient |
| D9507.10 | Infuse™ Olefin Block Copolymer (Dow Chemical, Midland MI) |
| SCLAIR 2714 | High Density Polyethylene (Nova Chemicals, Calgary, Alberta, Canada) |

(continued)

| Table 1 | |
|---|---|
| Brand | Ingredient |
| Irganox 1010 | Antioxidant (Ciba, Tarrytown, NY) |
| Irgofos 168 | Antioxidant (Ciba, Tarrytown, NY) |

All of Comparative Examples A-C and Examples 1-8 were made using a twin-screw extruder rotating at 400 rpm, and set at 180°C in Zone 1, 190°C in Zone 2, and 200°C for Zones 3-8 and Die. All ingredients were added before Zone 1. The melt-mixed compound was pelletized for further handling.

Pellets of all Comparative Examples and Examples were molded into 15 cm x 12.5 cm x 3.2 mm plaques using Cincinnati Injection molding machine then die cut into tensile test, operating at 200°C temperature and high pressure.

Table 2 shows the recipes and experimental results.

Because of the expense involved with an Olive Oil Extraction Test (EU82/711/ EEC), it was only performed on Comparative Example C and Example 4. It is permitted to substitute an Iso-Octane Extraction Test for the Olive Oil Extraction Test as a predictor, when testing nonpolar compounds (EN1186-14). (A 95% Ethanol Extraction Test can also substitute for Olive Oil Extraction Test, but for polar compounds. (EN1186-14) Test results on Comparative Examples A-C and Examples 1-8 were inconclusive because the compound being tested is nonpolar.)

| Table 2 | | | | | | | | | | | |
|---|---|---|---|---|---|---|---|---|---|---|---|
| | **A** | **B** | **C** | **1* 70/30** | **2* 60/40** | **3* 50/50** | **4 40/60** | **5* 70/30** | **6* 60/40** | **7* 50/50** | **8* 40/60** |
| Formulations (Wt. %) | | | | | | | | | | | |
| OBC D9507.10 | 0.00 | 0.00 | 99.01 | 69.30 | 59.40 | 49.50 | 39.60 | 69.30 | 59.40 | 49.50 | 39.60 |
| Sclair 2714 | 99.00 | 0.00 | 0.00 | 29.70 | 39.60 | 49.50 | 59.40 | 0.00 | 0.00 | 0.00 | 0.00 |
| R10G-00 | 0.00 | 99.00 | 0.00 | 0.00 | 0.00 | 0.00 | 0.00 | 29.70 | 39.60 | 49.50 | 59.40 |
| Irganox 1010 | 0.50 | 0.50 | 0.50 | 0.50 | 0.50 | 0.50 | 0.50 | 0.50 | 0.50 | 0.50 | 0.50 |
| Irgafos 168 | 0.50 | 0.50 | 0.50 | 0.50 | 0.50 | 0.50 | 0.50 | 0.50 | 0.50 | 0.50 | 0.50 |
| Test Results | | | | | | | | | | | |
| Shore Hardness (ASTM D 2240, 10s delay) | 66 (D) | 65 (D) | 60 (A) | 80 (A) | 86 (A) | 89 (A) | 92 (A) | 78 (A) | 86 (A) | 90 (A) | 92 (A) |
| Specific Gravity (ASTM D792) | 0.95 | 0.9 | 0.87 | 0.89 | 0.9 | 0.91 | 0.92 | 0.88 | 0.88 | 0.88 | 0.89 |
| Tensile Strength, psi (ASTM D412, Die C) | 3395 | 4210 | 318 | 542 | 738 | 1031 | 1385 | 704 | 1062 | 1323 | 1500 |
| Elongation, % (ASTM D412, Die C) | 15 | 350 | 929 | 920 | 500 | 200 | 75 | 604 | 250 | 521 | 533 |
| Olive Oil Extraction (mg/dm$^2$) (<10 Required) (EU82/711/ EEC) | | | 345 (Fail) | | | | 7.9 (Pass) | | | | |
| Iso-octane Extraction for nonpolar compounds, (mg/dm$^2$) (EN1186-14) | 3.9 | 6.6 | 670 | 48 | 18 | 12 | 7.6 (Pass) | 33 | 24 | 14.9 | 17.9 |
| Theoretical Olive Oil Extraction Using Iso-Octane (mg/dm$^2$) | | | | 470.17 | 403.56 | 336.95 | 270.34 | 470.98 | 404.64 | 338.3 | 271.96 |
| *not part of the invention | | | | | | | | | | | |

EP 2 432 831 B1

Table 2 shows the physical properties of Examples 1-8 typical of an excellently performing thermoplastic elastomer compound, with the unexpected addition of the first known compliance with the Olive Oil Extraction Test in Example 4. The substitute Iso-octane Extraction Test for Example 4 showed excellent correlation thereto, making all Iso-octane Extraction Test results of Examples 1-3 and 5-8 useful for prediction of Olive Oil Extraction test results.

Even though only Example 4 passed the Iso-octane Extraction Test, the other Examples 1-3 and 5-8 can still be useful in some commercial applications where food contact is anticipated.

Final approval for the Olive Oil Extraction Test is based on an entire plastic article or parts thereof, not on the individual materials used to make the parts or article. If a part is a TPE over-molded to a second polymer such as polyethylene or polypropylene, the part might still pass Olive Oil Extraction Test, even though one or more of the materials itself does not, when alone, pass the Olive Oil Extraction Test. As an example, if the TPE compound comprises less than 25% of the total surface of the part, the manufacturer of the part might be able to choose a TPE compound of the present invention with an Olive Oil Extraction Test value of less than 40mg/dm$^2$.

Thus, while not all of Examples 1-8 pass the Olive Oil Extraction Test or its predictive substitute Iso-octane Extraction Test, the results do demonstrate as low an extraction value as yet achieved for a TPE compound and one which is useful for plastic articles to comply with the Olive Oil Extraction Test.

Without being limited to a particular theory, it is believed that the olefin polymer contributes as some type of barrier to minimize any extractable contents from entering the test media.

Regardless of theory, what is truly unexpected is the tremendous reduction in actual Iso-Octane Extraction Test results compared with the theoretical Iso-Octane Extraction Test results extrapolated from the actual results of Comparative Examples C and A for Examples 1-4 and from the actual results of Comparative Examples C and B for Examples 5-8. The use of the olefin polymer actually provides over 10 times improvement over the theoretical value calculated by a straight line extrapolation between pure OBC and pure olefin polymer.

## Claims

1. A plastic article molded or extruded from a thermoplastic elastomer compound comprising:

    (a) high density polyethylene, and
    (b) ethylene/alpha-olefin interpolymer, wherein the interpolymer is an olefin block copolymer,

    wherein the olefin block copolymer and the high density polyethylene are present at a weight ratio of 40:60, wherein the plastic article passes Olive Oil Extraction Test EU82/711/EEC or Iso-octane Extraction Test EN1186-14.

2. The plastic article of Claim 1, wherein the plastic article is molded.

3. The plastic article of Claim 2, wherein the article is a food container.

4. The plastic article of Claim 2, wherein the article is a food utensil.

5. The plastic article of any of Claims 2-4, wherein the thermoplastic elastomer compound is overmolded on a second polymer.

6. The plastic article of Claim 5, wherein the second polymer comprises polyethylene or polypropylene.

7. The plastic article of any of Claims 1-6, wherein the ethylene/$\alpha$-olefin interpolymer comprises polymerized units of ethylene and $\alpha$-olefin, wherein the interpolymer is **characterized by** an average block index greater than zero and up to about 1.0 and a molecular weight distribution, Mw/Mn, greater than about 1.3.

8. The plastic article of Claim 7, wherein the $\alpha$-olefin is styrene, propylene, 1-butene, 1-hexene, 1-octene, 4-methyl-1-pentene, norbornene, 1-decene, 1,5-hexadiene, or a combination thereof.

9. Use of a thermoplastic elastomer compound for shaping a plastic article in compliance with Olive Oil Extraction Test EU82/711/EEC, wherein the thermoplastic elastomer compound comprises:

    (a) high density polyethylene, and
    (b) ethylene/alpha-olefin interpolymer, wherein the interpolymer is an olefin block copolymer,

wherein the olefin block copolymer and the high density polyethylene are present at a weight ratio of 40:60.

**Patentansprüche**

1. Kunststoffartikel, der aus einem thermoplastischen Elastomer-Compound geformt oder extrudiert ist, das umfasst:

  (a) Polyethylen hoher Dichte und
  (b) Ethylen/alpha-Olefin-Interpolymer, wobei das Interpolymer ein Olefin-Blockcopolymer ist,

  wobei das Olefin-Blockcopolymer und das Polyethylen hoher Dichte in einem Gewichtsverhältnis von 40:60 vorliegen,
  wobei der Kunststoffartikel den Olivenöl-Extraktionstest EU82/711/EEC oder den Isooctan-Extraktionstest EN1186-14 besteht.

2. Kunststoffartikel nach Anspruch 1, wobei der Kunststoffartikel geformt ist.

3. Kunststoffartikel nach Anspruch 2, wobei der Artikel ein Lebensmittelbehälter ist.

4. Kunststoffartikel nach Anspruch 2, wobei der Artikel ein Küchenutensil oder Besteck ist.

5. Kunststoffartikel nach einem der Ansprüche 2-4, wobei das thermoplastische Elastomer-Compound um ein zweites Polymer gespritzt ist.

6. Kunststoffartikel nach Anspruch 5, wobei das zweite Polymer Polyethylene oder Polypropylen umfasst.

7. Kunststoffartikel nach einem der Ansprüche 1-6, wobei das Ethylen/alpha-Olefin-Interpolymer polymerisierte Einheiten von Ethylen und $\alpha$-Olefin umfasst, wobei das Interpolymer durch einen mittleren Blockindex von größer Null und bis zu etwa 1,0 und eine Molekulargewichtsverteilung, Mw/Mn, von größer als etwa 1,3 gekennzeichnet ist.

8. Kunststoffartikel nach Anspruch 7, wobei das $\alpha$-Olefin Styrol, Propylen, 1-Buten, 1-Hexen, 1-Octen, 4-Methyl-1-penten, Norbornen, 1-Decen, 1,5-Hexadien oder eine Kombination davon ist.

9. Verwendung eines thermoplastischen Elastomer-Compounds zur Formgebung für einen Kunststoffartikel in Übereinstimmung mit dem Olivenöl-Extraktionstest EU82/711/EEC, wobei das thermoplastische Elastomer-Compound umfasst:

  (a) Polyethylen hoher Dichte und
  (b) Ethylen/alpha-Olefin-Interpolymer, wobei das Interpolymer ein Olefin-Blockcopolymer ist,

  wobei das Olefin-Blockcopolymer und das Polyethylen hoher Dichte in einem Gewichtsverhältnis von 40:60 vorliegen.

**Revendications**

1. Article de matière plastique moulé ou extrudé à partir d'un composé thermoplastique élastomère comprenant :

  (a) du polyéthylène haute densité, et
  (b) un interpolymère d'éthylène et d'alpha-oléfine, dans lequel l'interpolymère est un copolymère séquencé d'oléfine,

  dans lequel le copolymère séquencé d'oléfine et le polyéthylène haute densité sont présents dans un rapport pondéral de 40:60,
  dans lequel l'article de matière plastique satisfait au test d'extraction d'huile d'olive EU82/711/CEE ou au test d'extraction d'isooctane EN 1186-14.

2. Article de matière plastique selon la revendication 1, dans lequel l'article de matière plastique est moulé.

**3.** Article de matière plastique selon la revendication 2, dans lequel l'article de matière plastique est un récipient pour aliments.

**4.** Article de matière plastique selon la revendication 2, dans lequel l'article de matière plastique est un ustensile pour aliments.

**5.** Article de matière plastique selon l'une quelconque des revendications 2 à 4, dans lequel le composé thermoplastique élastomère est surmoulé sur un second polymère.

**6.** Article de matière plastique selon la revendication 5, dans lequel le second polymère comprend du polyéthylène ou du polypropylène.

**7.** Article de matière plastique selon l'une quelconque des revendications 1 à 6, dans lequel l'interpolymère d'éthylène et d'a-oléfine comprend des unités polymérisées d'éthylène et d'a-oléfine, dans lequel le copolymère est **caractérisé par** un indice de séquencement moyen supérieur à zéro et jusqu'à environ 1,0 et une distribution de poids moléculaire Mp/Mn supérieur à environ 1,3.

**8.** Article de matière plastique selon la revendication 7, dans lequel l'a-oléfine est le styrène, le propylène, le 1-butène, le 1-hexène, le 1-octène, le 4-méthyl-1-pentène, le norbornène, le 1-décène, le 1,5-hexadiène ou une de leurs combinaisons.

**9.** Utilisation d'un composé thermoplastique élastomère pour mouler un article de matière plastique en conformité avec le test d'extraction d'huile d'olive EU82/711/CEE, dans laquelle le composé thermoplastique élastomère comprend :

(a) du polyéthylène haute densité et
(b) un interpolymère d'éthylène et d'alpha-oléfine, dans lequel l'interpolymère est un copolymère séquencé d'oléfine,

dans lequel le copolymère séquencé d'oléfine et le polyéthylène haute densité sont présents dans un rapport pondéral de 40:60.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006101966 A
- WO 2006102155 PCT
- WO 2006101999 PCT
- WO 2006101926 PCT
- WO 2006101928 PCT
- WO 2006101924 PCT
- US 20090105374 A1
- US 5811494 A1

**Non-patent literature cited in the description**

- Plastics Additives Database. Plastics Design Library, 2004
- Tool and Die Repair Welding. Handbook of Mold. Plastics Design Library